# EUROPEAN PATENT SPECIFICATION

(11) **EP 3 393 851 B1**
(45) Date of publication and mention of the grant of the patent: **20.01.2021**
(21) Application number: 16825593.3
(22) Date of filing: 23.12.2016
(51) Int. Cl.: B60P 1/58

(54) **DEVICE FOR EMPTYING A CONTAINER, A CONTAINER SUITABLE FOR USE WITH THE DEVICE, A METHOD FOR EMPTYING A CONTAINER USING THE DEVICE, AND USE OF AN OSCILLATION TO EMPTY A CONTAINER**
VORRICHTUNG ZUM LEEREN EINES BEHÄLTERS, BEHÄLTER ZUR VERWENDUNG MIT DIESER VORRICHTUNG, VERFAHREN ZUM LEEREN EINES BEHÄLTERS ANHAND DER VORRICHTUNG UND VERWENDUNG EINER SCHWINGUNG ZUM LEEREN EINES BEHÄLTERS
DISPOSITIF PERMETTANT DE VIDER UN CONTENEUR, CONTENEUR CONÇU POUR ÊTRE UTILISÉ AVEC LE DISPOSITIF, PROCÉDÉ PERMETTANT DE VIDER UN CONTENEUR UTILISANT LE DISPOSITIF, ET UTILISATION D'UNE OSCILLATION POUR VIDER LE CONTENEUR

(30) Priority: 24.12.2015 NL 2016034
(43) Date of publication of application: 31.10.2018
(73) Proprietor: Internationaal Transportbedrijf H.J. Van Bentum B.V., 3931 MT Woudenberg (NL)
(72) Inventor: VAN BENTUM, Hendrik, 3931 MT Woudenberg (NL); VERMEULEN, Jan Dirk Aart, 3931 MT Woudenberg (NL)
(74) Representative: EDP Patent Attorneys B.V.
(86) International application number: PCT/NL2016/050916
(87) International publication number: WO 2017/111599

(56) References cited:
- WO-A1-2006/027556
- DE-A1- 2 450 455
- DE-U1- 29 815 718
- FR-A1- 2 365 458
- FR-A1- 2 862 919

## Description

### Field of the invention

The invention relates to a device for emptying a container, having a container outlet, of a semi-trailer comprising such a container. The invention further relates to a method for unloading a cargo from a container of a semi-trailer comprising the container.

### Background of the invention

Devices for unloading bulk materials from a semi-trailer are known in the art. WO2006027556 (A1) for instance, describes a vehicle or trailer for transporting cargo, for instance bulk goods capable of flowing. The vehicle or semi-trailer comprises a chassis and a container mounted on the chassis. The container comprises a basis, a number of cargo retaining walls, defining a volume for receiving the cargo, and a flow-out opening. The container is arranged on the chassis with at least one connector permitting a relative translation between first and second positions of the container with respect to the chassis, while it is arranged on it in order to move the cargo and stimulate it to flow out of the flow-out opening.

### Summary of the invention

Transportation of dry bulk products, both powdered and granular, usually takes place using silo-trailers: vehicles having a closed superstructure in the form of a tank. For unloading the cargo, in particular in case of so-called rear dischargers, the semi-trailer is equipped with a (hydraulic) telescopic cylinder, by means of which the tank can be tipped (moved upwards at the front and tilted, whereas the rear only partially tilts) and the cargo is able to flow in the direction of the outlet opening at the rear of the tank under the influence of gravity. A flow of (compressed) air supplied to the tank is then capable of dragging the bulk goods along and transporting it / allowing it to flow out of the tank. A drawback of this type of semi-trailer, also called 'silo tipper trailer', is the increased risk of accidents during unloading because of the elevated centre of gravity and the relating reduced stability during tipping. In addition, compared to tanker trucks for transporting a liquid substance (capable of flowing spontaneously to the outlet opening under the influence of gravity), silo-trailers have a much more complex and heavier configuration.

It is therefore an object of the present invention to provide a device enabling a container having a container outlet, in particular configured for containing and transporting bulk material to be unloaded, in particular without tipping (the container) in the process, wherein preferably the drawbacks of the devices known from the art are at least partially overcome.

For that purpose the invention according to a first aspect provides a device comprising an apparatus, in particular for moving a cargo in a container having a container outlet of a container transportation vehicle comprising said container, more in particular for emptying such a container, even more in particular for emptying a container having a container outlet of a semi-trailer, comprising said container, wherein the apparatus comprises: (i) a coupling element configured for a functional coupling of the container to an external element (such as a tractor), and (ii) an actuator configured for repeatedly translating the coupling element back and forth (relative to the actuator), in particular across a translation distance selected from the range of 0.1-50 cm, more in particular from the range of 0.1-5 cm, wherein the actuator is configured for (i) translating the coupling element forth for a first period of time in a first direction across the translation distance, wherein a first maximum acceleration is reached, and for (ii) translating the coupling element back again for a second period of time in a second, opposite direction, wherein a second maximum acceleration is reached, wherein in particular the first maximum acceleration is lower than the second maximum acceleration and wherein in particular the second maximum acceleration is at least 2 m/s², and wherein in particular the device is configured for translating the container repeatedly back and forth by means of the apparatus. According to the invention, the device comprises said container and the external element, wherein the coupling element is configured for a functional coupling of the container transportation vehicle (also called 'semi-trailer') to the external element. The device comprises said container and the external element, wherein the external element comprises a motorised driving means, such as a tractor (or "tractor-unit", "traction unit"), and wherein the motorised driving means comprises the apparatus. The device can therefore consist of two or more parts, which can be moved relative to each other (rotation and/or translation).

In an embodiment, the device according to the invention comprises an apparatus. In a further embodiment, the device comprises two or more apparatuses. In particular, the device comprises an 'assembly', such as an assembly of elements (including an apparatus). The term 'assembly' refers in particular to a functional combination of elements, such as a functional combination of an external element and a semi-trailer, in particular a functional combination of a tractor and a semi-trailer.

The invention in particular relates to (a device and a method for) emptying a container of a container transportation vehicle comprising the container, by repeatedly translating the container back and forth (to empty the container in jolts). The first and the second (opposite) direction are in particular selected to be parallel to a longitudinal axis of the container. In particular, the translation according to the invention in the first direction and in the second direction is a singular translation. In particular, emptying according to the invention is emptying without tipping (in Dutch jargon also called "kippen"). In an embodiment, the container transportation vehicle is a semi-trailer and the invention relates to emptying a container of a semi-trailer comprising the container. The invention in particular provides an improved alternative to emptying by means of tipping a container of a semi-trailer comprising the container, for instance of a silo container (semi-trailer), for bulk material, see further below.

However, the invention is not restricted to a specific type of container or container transportation vehicle comprising the container. The invention provides advantageous solutions for several types of container transportation vehicles, such as a trailer, a semi-trailer and a transport combination intended for transport (in a container or holder for cargo or more specifically a cargo space) in particular of solid (non-liquid) material and/or packed liquid material. In the description and the claims the term 'container' is being used. In particular, the 'container' is a holder for a freight or cargo. In embodiments, the container transportation vehicle comprising the container comprises vehicles used in agriculture, for instance a tipper (a trailer comprising an open container) or an open or closed trailer (an open or closed holder for the agricultural material comprising a trailer), for transporting agricultural produce and agricultural raw materials. In other embodiments, the container transportation vehicle comprises a trailer, semi-trailer, or lorry/truck combination for transporting packed goods, for instance in the form of boxes, crates, sacks, pallets, etcetera. Examples of this type of container transportation vehicles among others includes trucks comprising a cargo space, and trailers or semi-trailers of trucks, for instance for transporting (pallets with) boxes, as used in supplying shops and other businesses. In yet a further embodiment, the container transportation vehicle comprising the container comprises a moving van (comprising a cargo space) in particular for transporting boxes. In particular, the container transportation vehicle comprises a semi-trailer, also referred to by the term 'trailer'. Examples of semi-trailers are for instance a coil semi-trailer, a covered semi-trailer, a flatbed semi-trailer, a tipper trailer, a refrigerated semi-trailer, a mega semi-trailer, a plywood semi-trailer, a flatbed semi-trailer, a taut liner, a silo container semi-trailer, a rear discharger. The invention enables emptying or unloading such semi-trailers without tipping (the container and/or (a part of) the semi-trailer) in the process. In particular the invention relates to a silo container.

For all such 'freight' (further also referred to as 'cargo'), in particular all (unpacked) non-liquid cargo as well as all packed (liquid and non-liquid) cargo, it may be advantageous to unload the cargo from the container (containing the cargo during transport, and irrespective of the configuration of the container) by translating the container back and forth as described herein, wherein the cargo moves in the direction of the container outlet. It will therefore be clear that the invention as described herein can directly be used for unloading an ((unpacked) non-liquid or a packed) cargo from a cargo space comprised by a trailer, a semi-trailer, or for instance a truck.

The device in particular relates to (a device and method for) emptying bulk material from a container of a semi-trailer comprising the container. 'Bulk material' is also referred to (herein) by the term 'bulk goods', 'bulk cargo', and 'bulk product(s)', and in particular comprises (dry) powdered or granular material (i.e. (unpacked) non-liquid cargo). Bulk material in particular comprises solid material, which in terms of flow properties seems to behave like a liquid. Under the influence of an imposed force, bulk material may flow (freely) to a higher or lesser degree. In that case, bulk material will generally be exposed to more friction with material (mutually among the bulk material and the bulk material with 'external' materials) which it contacts than a liquid will. In particular bulk material will require the supply of more energy in order to let it flow than a liquid will.

Dry powders and granular material is often transported in a tipper, so that in order to be unloaded the wagon can be tipped, as a result of which the bulk material is able to flow out of the container under the influence of gravity. For some material, an open tipper / an open container can be used for that purpose. For other bulk materials closed containers are being used. In particular usually circular containers, in particular so-called silo containers are being used for the transportation of bulk goods. For emptying a silo container according to the state of the art a conduit, tube or hose can be connected to the container outlet (usually provided with a discharge elbow), capable of guiding the bulk goods onwards, downstream of the container outlet. During tipping the silo container, compressed air can be supplied to the container (and at the container outlet) in particular to allow the bulk goods to flow out of the container outlet and through the connected conduits more easily and facilitating emptying (or even making it possible). For tipping the silo container, such a semi-trailer comprises a chassis onto which the container is arranged, and a specific device to move one side of the container upwards, wherein the side comprising the container outlet is not moved upwards. The chassis of a silo semi-trailer, also called rear discharger (semi-trailer), according to the state of the art in particular on one side comprises a hinging element, over which the container is able to hinge during tipping, and on the other side it comprises a telescopic cylinder to tip the container, and further is generally configured with extra truck landing gear to provide the semi-trailer with stability when in the tipping position. In addition to the above-mentioned specific tipping facilities, a silo semi-trailer according to the state of the art also comprises a chassis on which the container rests.

It is an object of the present invention to provide an alternative for tipping (during emptying the container), wherein in particular the (semi-trailer comprising the) container does not need to be configured as complex and emptying the container leads to fewer safety hazards (in connection with the additional instability during tipping the silo semi-trailers according to the state of the art).

In an embodiment, the container as described in the invention therefore comprises a container for containing dry bulk material, in particular dry powdered material and/or granular material, wherein during unloading said dry bulk material is capable of leaving the container again (via the container outlet). For that purpose, measures as also used in containers according to the state of the art may in particular also be taken and/or selected for the container according to the invention. The container can for instance comprise (stainless) steel, which can be particularly useful for transporting foodstuffs. In another embodiment, the container comprises aluminium, for instance for transporting non-food material. In yet another embodiment, the (interior) wall of the container comprises a coating, in particular for preventing a reaction between the container and the bulk material. In yet another embodiment, the container comprises a synthetic material. To reduce any friction between the dry bulk material and the container, the (interior) wall can be configured smooth. The container in particular does not comprise 'blind corners', in which the bulk material might be left behind during unloading. The container in particular comprises a circular cross-section in a direction perpendicular to a longitudinal axis of the container.

In particular, the container comprises a silo container. In an embodiment, the container comprises a container volume, wherein the container volume comprises at least 25 m³, such as at least 40 m³, in particular at least 60 m³, such as in the range of 60-65 m³. The container in particular comprises a dimension measured along the longitudinal axis selected in the range of 20 - 45 feet. Silo containers generally have a substantially cylindrical shape. Therefore, silo containers generally have a substantially circular cross-section over a substantial part of the length of the longitudinal axis.

In an embodiment of the invention the container therefore comprises a silo container, configured for containing dry bulk materials and for allowing bulk materials to flow out of the container via the container outlet, in particular under overpressure. In an embodiment, the semi-trailer according to the invention comprises a rear discharger (semi-trailer), in particular wherein the rear discharger (semi-trailer) is not configured for tipping. As the container does not need to be tipped during unloading, a semi-trailer comprising the (silo) container can be configured less complex than a semi-trailer comprising the container according to the state of the art (which has to be tipped indeed in order to be emptied), wherein an equal firmness can be achieved. The semi-trailer comprising the container can for instance be configured self-supporting, wherein in particular the semi-trailer does not comprise a frame or chassis, but in particular the container comprises the function of the chassis. In particular, a substantial part of the distance between the one end of the container and the other end of the container can be spanned without a chassis. For instance, the distance between the rear (most) axle and the pin or other element (see below) for coupling to the fifth wheel or other element (see below) can be spanned without a chassis. The container can therefore be configured as chassis. A 'self-supporting (container) semi-trailer' will herein also be referred to as a 'self-supporting container' or a '(container) semi-trailer including self-supporting bodywork'. The semi-trailer according to the invention can further be configured without tipping facilities. In particular, a semi-trailer comprising the container according to the invention is less heavy than a semi-trailer comprising a container (suitable for a similar cargo) according to the state of the art, which for instance requires less fuel during transport and causes less harmful emissions during transport. In an embodiment, the semi-trailer comprising the container is self-supporting. In an embodiment, the container functions as chassis for the semi-trailer, and the semi-trailer in particular comprises no chassis beams, or at the most across a length of a maximum of 30% of the semi-trailer length.

The present invention in particular relates to repeatedly (in jolts) translating the container back and forth by means of the apparatus according to the invention. As described above, the apparatus is comprised by the device and the container is comprised by a semi-trailer (or a container transportation vehicle). The device according to the invention comprises at least the apparatus. In an embodiment, the device need not contain the container. In an embodiment, the device therefore does not comprise the container. In another embodiment, the device comprises the container, in particular the semi-trailer comprising the container. In yet another embodiment the device comprises the external element but not the container. In a further embodiment, the device comprises both the external element and the container. In particular, the device comprises the external element or the semi-trailer comprising the container; or the external element (such as a tractor) respectively, or the semi-trailer comprises the apparatus. In particular, if the device comprises the external element as well as the semi-trailer comprising the container, the apparatus can be comprised by the external element and the semi-trailer together. In particular, the device in that case comprises an 'assembly'. In particular, the assembly comprises the external element functionally connected to the semi-trailer comprising the container. In particular, the external element comprises the apparatus.

In particular, the device is configured for being able to have the container translate back and forth (relatively) with respect to the external element, in particular wherein during a translation the external element substantially does not move and the container does move. To be able to provide the translation of the container relative to the external element, the apparatus comprises a coupling element configured for a functional coupling of the container to the external element, in particular configured for a functional coupling of the semi-trailer (comprising the container) to the external element, in particular wherein the assembly (comprising the external element functionally coupled to the semi-trailer) is being provided. By way of this measure the apparatus is capable of providing a translation to the container, in particular to the semi-trailer comprising the container or the container vehicle comprising the container (in particular the cargo space). For translating the container, the apparatus will need to exert a force on the container (or the semi-trailer comprising the container), wherein a reactive force arises in opposite direction having a value equalling the force exerted. Due to the functional coupling between the container and the external element said reactive force will be exerted on the external element. That is why the external element is configured such that the external element is able to absorb this force wherein the external element in particular substantially does not move. In particular, the assembly (during use) comprises a dynamic part and a static part; or a part which translates (or is capable of translating), respectively, and a part that substantially does not move. The apparatus (also) comprises in particular a dynamic apparatus part capable of moving and a mounting part that does not move relative to the dynamic apparatus part. In particular, a part of the apparatus (in particular the mounting part) is comprised by the static part (of the assembly) and an (other) part of the apparatus (in particular the dynamic apparatus part) is comprised (during use) by the dynamic part (of the assembly). In particular, the dynamic part (of the assembly) comprises the coupling element.

In particular, the dynamic part (of the assembly) comprises the semi-trailer. The semi-trailer comprises wheels, with which the semi-trailer in particular can move easily when a force is exerted on the semi-trailer (during translating). The apparatus in particular comprises a static part and a dynamic part.

In an embodiment, the external element therefore comprises an immobile external element, such as an external element anchored to the ground. In particular, the external element comprises a motorised driving means, in particular a motorised driving means having sufficient inertia to be able to absorb the reactive force without (also) (substantially) taking over the translation. In an embodiment, the motorised driving means comprises a tractor (of which during translating, the wheels can be blocked), in particular configured for drawing ("hauling") (a trailer or) a semi-trailer comprising a container. In another embodiment, the motorised driving means is specifically configured for being able to draw (haul) a semi-trailer comprising the container (and for being able to absorb the reactive forces without moving). In particular, the motorised driving means comprises at least four wheels and a brake configured for blocking two or more of the wheels. In particular, the motorised driving means is configured for not (substantially) translating during unloading, in particular when the container is repeatedly translated back and forth by means of the apparatus. In particular, the method for unloading cargo as described herein (see further below), in an embodiment (therefore) comprises not having the external element translate (substantially), in particular also blocking one or more wheels of the motorised driving vehicle, in particular the wheels of a tractor, by means of the brake. Combinations of external elements can also be used.

In an embodiment, the functional coupling between the external element, in particular the motorised driving means, and the semi-trailer is provided by a coupling comprising a so-called male element and a female element. Examples of this type of coupling are known to the expert and for instance include (i) a drawbar coupling, wherein a pin of the coupling is arranged in an eye of a drawbar of for instance a trailer, (ii) a tow hook coupled to a ball, and (iii) a coupling used in a tractor-trailer having a fifth wheel and a pin (usually referred to by the term 'kingpin'). In particular, the male and female elements at least need to engage into each other in a direction (parallel to the first and second direction of the translation) substantially without clearance. By substantially clearance-free engagement into each other, the translation can be transferred optimally.

In an embodiment, the apparatus, in particular the coupling element, comprises the male element of the coupling. In another embodiment, the apparatus, in particular the coupling element comprises the female element.

In an embodiment, the device, in particular the semi-trailer, more in particular the coupling element, comprises a pin, in particular a kingpin, wherein the pin is configured for coupling (the semi-trailer) to an external element, in particular to (a fifth wheel of) an external element, in particular a tractor. In a further embodiment, the pin is (rigidly) attached to the coupling element.

In another embodiment, the device, in particular the coupling element, comprises a fifth wheel. In a further embodiment, the apparatus is configured for facilitating an attachment of the fifth wheel to the coupling element, in particular for arranging a first part of the apparatus between the fifth wheel and a tractor chassis. In particular, the first part of the apparatus comprises the mounting part and the coupling element (not comprising the fifth wheel). In an embodiment, a first dimension of the first part of the apparatus, in particular the height, is selected from the range of 10-400 mm, in particular 15-300 mm, more in particular 20-200 mm. The other two dimensions of the first part of the apparatus, in particular the width and the length, can in these embodiments be selected freely. These dimensions can for instance be selected in the range of 1-2.5 m, wherein in particular the first part of the apparatus can still be arranged between a fifth wheel and a chassis of a tractor. In particular, the first part of the apparatus is configured such that when it is arranged between the fifth wheel and the chassis of the tractor, the functionality of the coupling between the tractor and a semi-trailer during transport of the (tractor-trailer) combination substantially equals the functionality of a coupling between the tractor and a semi-trailer according to the state of the art. In particular, the dimensions (length, width, height) of the first part of the apparatus have been selected such that the (first part) can be arranged at the location of a bearing plate or mounting plate - that may optionally be present for properly adjusting (the height of) the fifth wheel and the semi-trailer to each other -. In an embodiment, the maximum height of the first part of the apparatus is 100 mm, such as 80 mm. In an embodiment, the maximum dimensions are selected parallel to the first and second direction from the range of 40-70 cm, and the maximum dimension in a direction perpendicular to the first and second direction is selected in the range of 80-100 cm, such as 85-95 cm. In an embodiment, the coupling element is rigidly attached to a fifth wheel. In an embodiment, the coupling element comprises a fifth wheel. In particular, the fifth wheel (comprised by the coupling element) is configured for coupling a semi-trailer comprising the container.

In a further embodiment, the device comprises a tractor for drawing (hauling) a semi-trailer comprising the container, wherein the tractor in particular comprises the coupling element (comprising the fifth wheel). The tractor, comprising the fifth wheel, can in particular be coupled to the container, in particular to the semi-trailer.

In yet another embodiment the device comprises a semi-trailer comprising the container, wherein in particular the semi-trailer comprises the apparatus.

In an embodiment, the device comprises a (bulk) semi-trailer, in particular a non-tipping (bulk) semi-trailer, wherein in particular the (bulk) semi-trailer comprises the container. In a further embodiment, the (bulk) semi-trailer comprises the apparatus. The (bulk) semi-trailer, comprising the apparatus, can in particular be coupled to the external element.

In a further advantageous embodiment, the device comprises a tractor-trailer, in particular a tractor-trailer for bulk goods. In particular, the tractor-trailer comprises one apparatus, comprised by either the tractor or the semi-trailer. In particular, the tractor and semi-trailer together comprise the apparatus. In an embodiment, the tractor comprises the actuator and the semi-trailer comprises the coupling element.

As described above, the apparatus comprises a coupling element, capable of providing (or imposing) the translational motion back and forth. For that purpose, the apparatus further comprises an actuator, configured for translating the coupling element back and forth across a translation distance, in particular selected from the range of 0.1-50 cm, such as of 0.1-10 cm. In particular, the translation distance is selected from the range of in particular 0.1-5 cm. The actuator is in particular configured for translating the coupling element (for the first period of time) at a specific maximum (first) acceleration in the first direction and (subsequently) (for the second period of time) at a maximum (second) acceleration translating it in the second (opposite) direction, wherein in particular the second acceleration is selected higher than the first acceleration. Due to the functional coupling of the apparatus to the container, the translation of the coupling element can be imposed on the container by the apparatus, wherein therefore in particular in the first direction the container is provided with a translation at a lower acceleration than in the second direction. Due to its mass inertia, the cargo is consequently able to shift in the first direction. The actuator is therefore configured for (i) translating the coupling element for the first period of time in the first direction across the translation distance, wherein the first maximum acceleration is reached, and for (ii) translating the coupling element back again for the second period of time in the second, opposite direction, wherein the second maximum acceleration is reached, wherein the first maximum acceleration is lower than the second maximum acceleration and the second maximum acceleration is at least 2 m/s², in particular at least 3 m/s², even more in particular at least 5 m/s². In particular, the first and the second acceleration are defined in the first and the second direction, respectively, wherein a positive value for the first acceleration means that the translation accelerates in the first direction, whereas a positive value for the second acceleration means that the translation accelerates in the second direction.

During the translational motion back and forth the coupling element does not need to accelerate at a constant speed. The first and second acceleration may increase during the first and second period of time, respectively. The first and second acceleration can be constant during the first and second period of time, respectively. However, the accelerations can also be negative (the speed going down) or be equal to 0 during the first and second period of time, respectively. Combinations of unchanged and increasing and decreasing positive and negative accelerations during the first and second period of time are also possible. In an embodiment, for instance the first acceleration first increases, then it remains constant, then decreases again (down to zero), subsequently becomes negative and ends at zero again during the first period of time.

For making efficient use of the cargo's mass inertia it may be advantageous when the first period of time is longer than the second period of time. In an embodiment, the actuator is therefore configured such that the first period of time is longer than the second period of time. In particular, the first period of time is selected in the range of 0.1-20 sec., such as 0.1-10 sec., such as 0.1-5 sec., in particular 0.1-2 sec., even more in particular 0.5-2 sec., such as 0.5-1.5 sec. In particular, the second period of time is selected from the range of 0.01-1 sec., such as 0.02-0.9 sec., in particular 0.05-0.5 sec., such as 0.1-0.4 sec. In an embodiment, the actuator is configured for providing the coupling element with the translational motion back and forth at a frequency selected from the range of 1-120 Hz, in particular of 10-120 Hz, even more in particular of 20-100 Hz, such as of 20-60 Hz, in particular of 40-60 Hz.

For emptying the container, the first direction and the second direction can be selected such that the cargo in the container is able to shift in the direction of the container outlet. However, it can also be advantageous to (temporarily) swap the first direction and the second direction. In an embodiment, the actuator is therefore configured for enabling the swap of the first direction and the second direction. Choosing the first direction and the second direction such that the cargo is able to move away from the container outlet can for instance be advantageous for loading a container, for instance loading a cargo space of a truck or moving van.

Repeatedly swapping the first direction and the second direction can further also be advantageous for flattening out (the level) of the bulk material in a container. Flattening out (the level) of the bulk material may for instance be advantageous if the bulk material (is or) has been loaded in the container via a number of openings, wherein (the level of) the bulk material has not been distributed homogeneously over the volume of the container, but rather the bulk material has been poured in the form of heaps. By flattening out the bulk material, the degree of filling of the container can be increased. In an embodiment, the direction of the first direction and the direction of the second direction can therefore be swapped.

The expert is familiar with several types of actuators that are or can be configured for comprising the above properties. The actuator may for instance comprise an electric actuator. The actuator may comprise a pneumatic actuator. The actuator may comprise an electromagnetic actuator. In particular, the actuator in an embodiment comprises a hydraulic actuator, in particular to be directly connected to the hydraulics of a tractor.

In a further embodiment, the actuator comprises a mechanical actuator. In embodiments, the actuator comprises a combination of said actuators. Examples thereof are an actuator comprising a mechanical actuator and/or an electric actuator, or an actuator comprising a hydraulic actuator and a mechanical actuator, etcetera.

In a further embodiment, the actuator comprises a rotation-translation-system. In particular, the actuator comprises a (rotation-translation-) system configured for a converting a rotation (of a rotating element) into a translation (of a second element). For that purpose, the actuator may comprise a crankshaft system (crankshaft mechanism). Crankshaft systems are known to the expert and comprise in particular the rotating element comprising a crankshaft or a disk and the second element comprising a connecting rod. In an embodiment, the actuator comprises a crankshaft and/or a disk and a connecting rod. The crankshaft (or disk) is in particular configured for rotating about a point of rotation. The connecting rod is in particular arranged with a first outer end at an engagement point on the crankshaft or the disk. An opposite second outer end of the connecting rod is in particular coupled to the coupling element.

In such a configuration, a rotation of the crankshaft or disk provides a rotation of the point of engagement about the point of rotation. In particular, the crankshaft system is configured such that at a constant rotary speed (about the point of rotation), the translation velocity of the second outer end of the connecting rod varies as a result of the rotation of the point of engagement. In such a configuration, a rotation of the rotating element can provide a translation of the second outer end of the connecting rod (the second element). In particular, the translation distance (also see above) is proportional to a distance between the point of engagement and the point of rotation. In that case, in particular the translation of the second outer end in a first direction can be provided at a lower acceleration than the translation in an opposite, second direction.

In a crankshaft system, the point of engagement is able to rotate about an axis of symmetry. In particular, the crankshaft system is not configured symmetrically. In embodiments, the system is configured such that the axis of symmetry does not comprise the point of rotation (about which the rotating element rotates). Examples of this type of configuration are among others an embodiment of an actuator comprising a circular disk having a radius and a central centre, wherein the point of rotation is configured at a distance to the central centre (comprising the axis of symmetry) selected from the range of 5-100%, for instance 10-95%, of the disk radius. The invention provides similar embodiments with a crankshaft instead of a disk.

In this document the terms 'connecting rod', 'crankshaft' and 'disk' may also relate to more than one 'connecting rod', more than one 'crankshaft' and more than one 'disk'. A crankshaft can for instance be provided with one, two or more than two cranks. The actuator can also be provided with more than one crankshaft and/or more than one disk. The term 'disk' may also refer to a cylindrical element.

In embodiments, such as in the tractor-trailer, the semi-trailer will move relative to the motorised driving means, such as the tractor, as a result of the translational motion(s) during unloading. As indicated above, the device can consist of two (or more) parts, which can be moved relative to each other (rotation and/or translation).

In embodiments, the device further comprises a control unit and at least a sensor, wherein the sensor senses a specific change or a characteristic of the device (including a part thereof) and/or the assembly. Herein, the term 'sensor' can refer in particular to one sensor as well as to two or more sensors. In an embodiment, the sensor may for instance sense the weight of the cargo (in the container), and it can be determined how full the container (still) is. In a further embodiment, the sensor senses a pressure force on the coupling element, for instance as measure for the degree of filling of the container. In another embodiment, the sensor senses the maximum acceleration (in the first direction and/or in the second direction), in particular for on the basis thereof being able to determine the stage of emptying, and for instance to determine whether the translation needs to be adjusted. In yet a further embodiment the sensor senses one or several axle loads of the semi-trailer and optionally also of the motorised driving means and/or an axle load difference (between (one or several) of the sensed axle loads), for instance as measure for the distribution of the cargo over the container, or the degree of filling of the container. For that purpose, in particular, the sensor senses one or several axle loads and/or axle load differences of the semi-trailer. The detected characteristic and/or the detected change can subsequently be used (by the control unit) for controlling the actuator. The detected characteristic and/or the detected change is also shown in embodiments, after which, if necessary the translation can be controlled manually. The device in an embodiment therefore further comprises a control unit configured for controlling the actuator, and a sensor configured for sensing a characteristic of the device, wherein the control unit controls the actuator as function of the characteristic, in particular wherein the characteristic is selected from the group consisting of a pressure force on the coupling element, a maximum acceleration of the coupling element, a force on the coupling element, an axle load of a semi-trailer, and an axle load difference, in particular of a semi-trailer. In particular, the term 'characteristic' may in this document refer to one characteristic, but also to two or more characteristics. In particular, the control unit is able to control the actuator on the basis of a combination of (different) characteristics.

The control unit in particular also comprises a display on which the values of one or more of the characteristics can be shown. In a further embodiment, the control unit comprises logics (operating software) for (automatically) controlling the actuator. In yet a further embodiment the control unit comprises input options for manually entering the actuator settings.

On the basis of the sensed characteristics it may for instance be decided to carry out the translation more gradually, or indeed to put more energy into the translation, wherein this can be done manually and/or automatically. In a further embodiment, the control unit is configured for reducing or increasing one or more of the translation distance, the first period of time, the second period of time, the first maximum acceleration, and the second maximum acceleration (in particular in relation to the first period of time and the second period of time) if the characteristic exceeds a specific value. In an embodiment, the control unit is configured for stopping the translation stage if the characteristic exceeds a specific value. A specific value may for instance be exceeded in case of a failure or the moment the container has been emptied.

In that way, the invention in an embodiment provides the device comprising a *semi-trailer* comprising a container having a container outlet, and an apparatus for emptying the container, wherein the device is configured for by means of the apparatus repeatedly translating the container back and forth. In that way the invention in another embodiment provides the device comprising a *tractor* comprising an apparatus for emptying a container having a container outlet of a semi-trailer comprising said container, wherein the coupling element is configured for a functional coupling of the tractor to the semi-trailer, and wherein in particular the device is configured for by means of the apparatus repeatedly translating the container back and forth (wherein the tractor stands substantially still and the semi-trailer translates back and forth).

In particular, said semi-trailer can be configured less complex and more lightweight than semi-trailers from the state of the art. In that way, the invention also provides a semi-trailer comprising a container having a container outlet, wherein the container can be coupled to (an embodiment of) the device according to the invention, is configured for containing dry bulk materials and for allowing the dry bulk materials to flow out of the container in particular under overpressure, and wherein the semi-trailer comprising the container is self-supporting and in particular is not configured for tipping. In addition, the (silo) semi-trailer therefore in particular has no hinging element, over which the container can hinge during tipping, and/or a telescopic cylinder to tip the container.

According to a further aspect the invention provides a method for moving cargo out of a container of a semi-trailer comprising said container, in particular for unloading cargo from a container of a semi-trailer comprising said container, wherein the container comprises a container outlet, the method comprising: (i) providing the semi-trailer comprising the container, an external element, and the apparatus according to the invention, wherein the container is functionally coupled to the external element by means of the coupling element, (ii) opening the container outlet of the container, and (iii) in a translation stage, translating the coupling element back and forth across a translation distance in particular selected from the range of 0.1-50 cm, more in particular from the range of 0.1-5 cm, wherein the translation stage comprises: translating the coupling element forth in a first direction, wherein a first maximum acceleration is reached; and subsequently translating the coupling element back again in a second, opposite direction, wherein the coupling element achieves a second maximum acceleration, wherein the first maximum acceleration is lower than the second maximum acceleration and in particular the second maximum acceleration is at least 2 m/s², more in particular at least 3 m/s², and even more in particular at least 5 m/s², and repeating the translation stage (until the desired cargo has been unloaded from the container), wherein the container is repeatedly translated back and forth, and wherein the container in particular is not tipped, and in particular wherein the semi-trailer is functionally coupled to the external element by means of the coupling element.

In particular, the method can be used with the device (comprising the apparatus) according to the invention. In embodiments (of the method) the device comprises the container (more in particular the semi-trailer comprising the container) and in particular not the external element.

In embodiments (of the method) the semi-trailer comprising the container comprises a rear discharger (semi-trailer).

In an embodiment (of the method) the device comprises the container and the external element.

In embodiments (of the method) the device comprises the external element comprising the apparatus, and in particular also the container (more in particular the semi-trailer comprising the container).

In an embodiment (of the method) the device comprises the external element, wherein the external element comprises a motorised driving means, in particular a tractor.

In an embodiment (of the method) the device comprises a tractor-trailer.

In an embodiment (of the method) the apparatus is comprised by the external element and the semi-trailer (together), i.e. a part of the apparatus is comprised by the external element and the other part of the apparatus is comprised by the semi-trailer.

In particular, unloading the container comprises emptying the container in jolts, wherein in particular the external element (substantially) does not move. During the apparatus translating, the cargo can be moved in the direction of the container outlet. In particular, the cargo is able to translate along with the container during each first period of time. In particular, the cargo is able to translate in the container across a maximum distance in the direction of the container outlet during the second period of time. Preferably, unloading is carried out as quickly as possible. In an embodiment, the translation stage therefore comprises translating the coupling element forth in a first direction and back in a second direction at least 30 times a minute, and in particular at the most 120 times a minute.

An embodiment of the method further comprises the apparatus (the device), wherein the actuator is able to (temporarily) provide the conditions of the second direction to the first direction and the conditions of the first direction to the second direction. In particular, in such a method, the coupling element can (temporarily) for a second period of time translate (forth) in the first direction, wherein a second maximum acceleration is reached, and for a first period of time translate (back again) in the second direction, wherein a first maximum acceleration is reached. In particular, the method therefore comprises flattening out the cargo level in the container by in the translation stage repeatedly swapping the conditions of the first direction and the second direction. Such a method can be carried out during loading the container, wherein the level (of heaps) of bulk material poured into the container is levelled out. Temporarily swapping the first direction and the second direction, can also be advantageous during unloading the cargo from the container, in particular if (a part of) the cargo gets stuck and does not (sufficiently) move in the direction of the container outlet during translating.

In particular, for the method a hose can be connected to the container outlet (by means of a discharge elbow), for guiding the cargo leaving the container outlet onwards to a final destination, downstream of the container outlet, such as a storage silo. For transportation by hose it is advantageous to let the dry substance flow together with a gas. In particular, it is therefore possible, at least during a part of the translation stage, to provide an overpressure in the container. For that purpose, for instance compressed air (or another gas) having an (over)pressure selected from the range of 0.1-10 bar, such as 0.2-2 bar can be passed into the container. In particular air is added via a compressor., The semi-trailer in particular comprises a compressor for providing compressed air, in particular for providing an overpressure in the container. In addition, the gas (the compressed air) can be added to the hose, in particular via the discharge elbow, wherein the flowing of the cargo, in particular of bulk material, through the hose is supported downstream of the container outlet. In an embodiment, the device comprises a compressed air unit, such as a compressor.

In particular, in the method use is made of the control unit as described above. In an embodiment, wherein the method, in particular the device, comprises a control unit and a sensor, the sensor senses, during the translation stage, one or more of the characteristics selected from the group consisting of a pressure force on a coupling element, an acceleration of the coupling element, a velocity of the coupling element, an axle load of the semi-trailer, and an axle load difference (between one or more axle(s) of the semi-trailer and/or one or more axle(s) of an external element, in particular a motorised driving means), in particular of the semi-trailer, and in particular a first period of time and a second period of time, and the control unit controls the actuator as a function of the characteristic. In an embodiment, translating is stopped as a function of the characteristic, in particular when the characteristic is a measure for a problem during unloading (such as a blockage downstream of the container outlet). In a further embodiment, translating is stopped if the characteristic shows that the container is empty.

In a further embodiment, the method is carried out using a tractor having a fifth wheel, wherein in particular the semi-trailer comprising the container is coupled to the tractor via the fifth wheel, and wherein the tractor comprises the apparatus. In an embodiment of the method the external element comprises a tractor comprising the apparatus, the coupling element comprises a fifth wheel, the semi-trailer is coupled to the fifth wheel, and translating the coupling element back and forth in the translation stage comprises in particular translating the fifth wheel back and forth, in particular wherein the semi-trailer translates back and forth (relative to the tractor), and in particular wherein the tractor substantially does not translate, in particular by blocking the wheels of the tractor (such as by actuating the brake on one or several wheels).

In an embodiment, the method comprises the semi-trailer comprising the apparatus. In this embodiment, the semi-trailer can in particular be coupled to a tractor for unloading the cargo. The semi-trailer can however also be coupled to another motorised vehicle. The semi-trailer can also be coupled to a non-mobile external element (such as an external element anchored to the ground) for unloading the cargo. In an embodiment of the method the semi-trailer comprises the apparatus, the coupling element comprises a pin, configured for coupling the semi-trailer to the external element, wherein the pin has provided the coupling of the semi-trailer to the external element, translating the coupling element back and forth in the translation stage comprises in particular translating the pin back and forth, wherein in particular the semi-trailer translates back and forth (relative to the external element), and in particular the external element substantially does not translate.

In particular, the method makes use of one or more (combinations of) embodiments of the device, external element, semi-trailer, and container as described herein. In particular, the device is also configured for enabling the method to be carried out. Device-embodiments provided by the invention can therefore also be seen as embodiments that can be used in the method, and elements of the embodiments of the method as described herein can comprise device-embodiments.

The invention as described herein can be used for emptying cargo from a container in jolts, such as a closed container (for instance a silo container, but also a cargo space) or an open container (for instance an open trailer or a tipper) without tipping, by (repeatedly) translating back and forth, in a first direction wherein a first maximum acceleration is reached, and in a second, opposite direction, wherein a second maximum acceleration is reached, and wherein the first maximum acceleration in the first direction is lower than the second maximum acceleration and the second maximum acceleration in particular is at least 2 m/s², more in particular at least 3 m/s², and even more in particular at least 5 m/s².

### Brief description of the figures

Embodiments of the invention will now be described by way of example, referring to the accompanying schematic drawings in which similar reference numbers refer to similar parts, and wherein:
Figure 1 schematically shows a number of aspects of an embodiment of the device, in particular relating to the apparatus;
Figures 2a-2b schematically show a number of aspects of an embodiment of the device;
Fig 2c schematically shows a comparative example of an alternative solution;
Figures 3a-3b schematically show a number of aspects of an embodiment comprising a fifth wheel;
Figure 4 schematically shows an embodiment of the actuator.
The figures are not necessarily to scale. Below the figures will be described in more detail.

### Description of the embodiments

In the figures, similar parts are referred to by the same reference numbers.

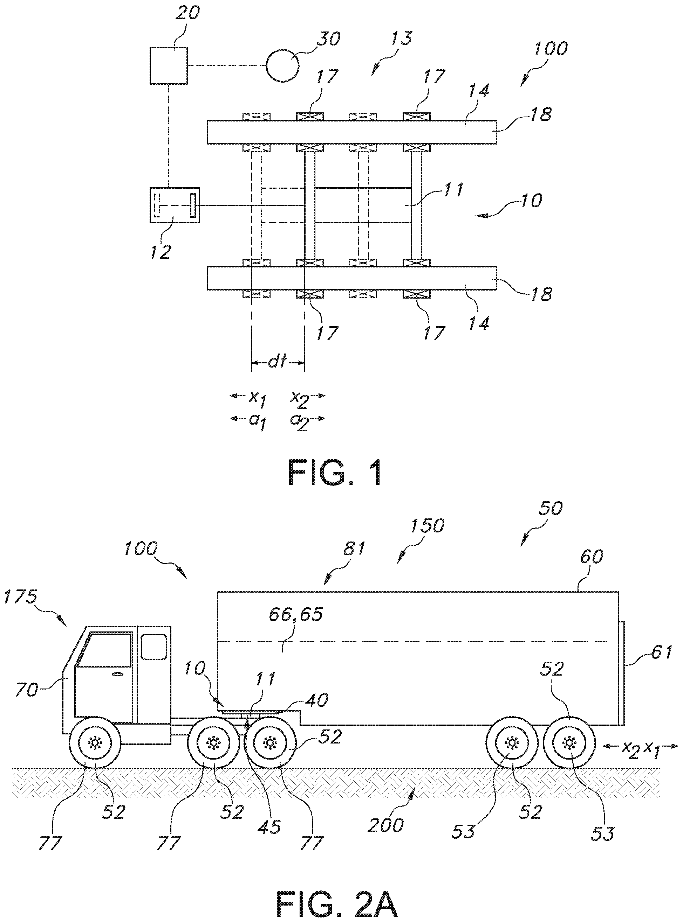

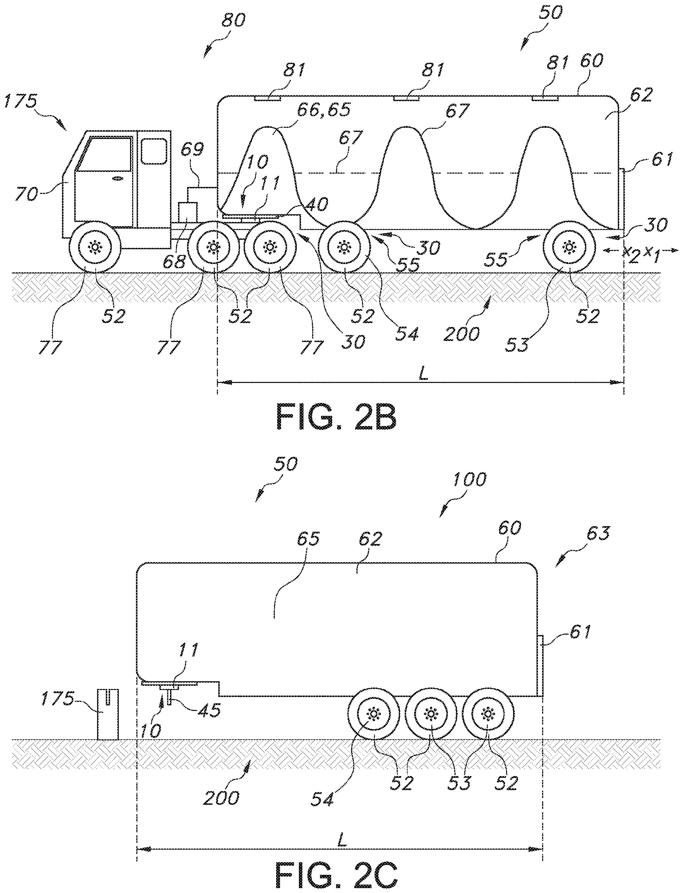

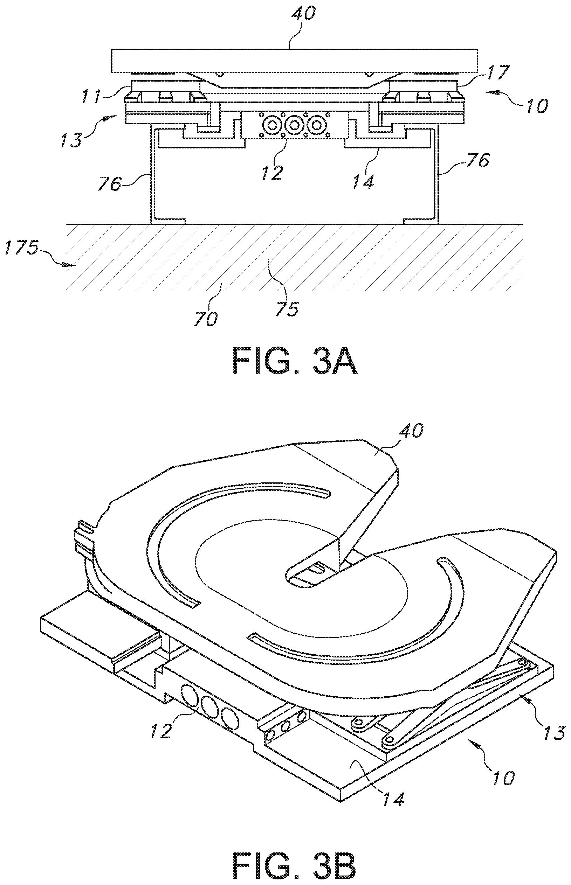

In figure 1 a few aspects of the device 100, particularly regarding the apparatus 10, are schematically shown. The apparatus 10 comprises a coupling element 11 and an actuator 12, wherein the coupling element 11 is configured for a functional coupling of the container 60 to an external element 175 (see figure 2). The apparatus 10 is configured such that it is able to translate back and forth about the coupling element 11 across a translation distance dt, see the shift across the translation distance dt schematically shown on the basis of the dotted version of the coupling element 11 relative to the regularly drawn version of the coupling element 11. For that purpose, the apparatus 10 comprises the coupling element 11 and at least a mounting part 14 capable of translating relative to each other, wherein the mounting part 14 is substantially 'static' and the other part, the coupling element 11, is mobile. In the shown embodiment, the apparatus for that purpose is provided with slide bearings 17 capable of ensuring that the coupling element 11 is able to translate relative to the static mounting part 14 comprising rods 18. The rods 18 are, or more generally, the mounting part 14 is in particular configured at or on an external element 175 or a semi-trailer 50. The apparatus 10 comprises a first part 13, at least comprising the mounting part 14 and the coupling element 11 as schematically shown in figure 1. In embodiments, this first part 13 is configured to be placed under a fifth wheel (further see figures 3a-b). In particular also (a part) of the actuator 12 can be comprised by the first part 13 and be arranged under the fifth wheel, as schematically shown in figures 3a-3b. The translation can be provided by the actuator 12, such as a hydraulic actuator 12 shown in figure 1 or for instance a mechanical actuator 12, wherein for a first period of time t1 the coupling element 11 translates forth in a first direction x1 across a translation distance dt, wherein a first maximum acceleration a1 is reached, and for a second period of time t2 the coupling element 11 translates back again in a second (opposite) direction x2, wherein a second maximum acceleration a2 is reached. The apparatus according to the invention is configured such (and in the method according to the invention the accelerations are selected such) that the second maximum acceleration a2 is higher than the first maximum acceleration a1. Because the second maximum acceleration a2 is higher than the first maximum acceleration a1, a cargo 66 in the container 60 (see figure 2) can be displaced in jolts in the first direction x1 as a result of the inertia of the cargo 66. Due to the mass inertia of the cargo 66, the container 60 is able to move as it were around the cargo 66 in the second direction, whereas in the first direction, indeed because of the low(er) value for the maximum acceleration a1, the cargo 66 is able to move along with the container 60. In embodiments, the coupling element 11 is translated forth in the first direction x1 and back again in the second direction x2 at least 30 times a minute. Figure 1 also shows that the device 100 can comprise a control unit 20 and at least a sensor 30, so that by means of the control unit 20 the actuator 12 can be controlled (see further below).

In figures 2a-2b several embodiments of the device 100 are shown. The device 100 comprises at least the apparatus 10 including the coupling element 11 and the actuator 12. In addition, the device 100 comprises in particular the container 60 and/or the external element 175 and the coupling element 11 is configured for a functional coupling of the semi-trailer 50 having the container 60 to the external element 175. The whole of an external element 175 and a semi-trailer 50 (having container 60), wherein the semi-trailer 50 and the external element 175 are functionally coupled to each other, as shown in figures 2a and 2b, is also referred to herein by the term assembly 150. The apparatus 10 is in particular configured for emptying the container 60 via the container outlet 61 by repeatedly translating said container 60 back and forth, without tipping it. The container 60 can comprise an open container 60 (see figure 2a), wherein the open side comprises the loading opening 81 or a closed container 60, such as a moving van (not shown) or a silo container 62 comprising a cargo 66, comprising dry bulk materials 65, in particular a powdered or granular material, as schematically shown in figure 2b. The device 100 in figure 2a comprises the apparatus 10 and the external element 175, wherein the external element 175 comprises a motorised driving means 70 comprising the apparatus 10. In this embodiment, the coupling element 11 comprises a fifth wheel 40, configured for via a pin 45 coupling the semi-trailer 50 comprising the container 60. For emptying the container 60 the semi-trailer 50 is coupled to the device 100 by a coupling via the fifth wheel 40.

As in figure 2a the semi-trailer 50 is coupled to the external element 175, said figure in fact also schematically shows an embodiment in which the device 100 in addition to the external element 175 comprises the semi-trailer 50 and the device therefore comprises an assembly 150. During emptying a translation is imposed on the coupling element 11. The translation is passed on to the semi-trailer 50, wherein the external element 175 substantially does not move and the semi-trailer 50 translates back and forth, in particular wherein the wheels 52 of the semi-trailer 50 (the semi-trailer rear wheels 53) are able to rotate and the semi-trailer moves relative to the bottom 200 or ground on which the semi-trailer 50 is standing (see arrows X1, X2). The motorised vehicle 70 in particular is a non-static / mobile external element 175, which during the translation of the coupling element 11 is indeed kept substantially static, for instance by blocking the wheels 52 of the motorised vehicle 70, in particular by blocking the tractor wheels 77 of the tractor 70 using the brake.

In yet another embodiment, the external element 175 comprises a tractor 75, see figure 2b. In this embodiment, the tractor 75 comprises the coupling element 11 comprising the fifth wheel 40 and the semi-trailer 50 is coupled to the fifth wheel 40. For unloading the cargo 66 / emptying the container 60, in particular the silo container 62, the translation is provided to the coupling element 11 (more slowly in the direction of the container outlet 61 than in the opposite direction). If the tractor wheels 77 are blocked, the translation can be transferred to the semi-trailer 50, in particular to the container 60, as a result of which the cargo 66, in particular the bulk material 65, is able to shift in the direction of the container outlet 61 and leave the container 60 at that location (after opening the container outlet 61). In that case the semi-trailer 50 will be able to translate, wherein the semi-trailer front wheels 54 and semi-trailer rear wheels 53 are able to rotate. In that way, the cargo 66 can also be unloaded from the container 60 in jolts without tipping. For letting the dry bulk materials 65 flow out of the container 60, in embodiments the container can be put under overpressure, for instance by supplying compressed air 69 from a compressor 68. In particular figure 2b simultaneously shows the device 100 according to the invention comprising a tractor-(bulk) trailer 80. It will be clear that the tractor-trailer comprises only one apparatus 10.

Figure 2b further schematically shows another advantage of the invention. By temporarily swapping the first and second directions x1, x2 the level 67 of the cargo 66 can be flattened out. Flattening out (the level 67 of) the bulk material 65 may for instance be advantageous if the bulk material 65 has been (or is) loaded via a number of loading openings 81 in the container 60, wherein the level 67 of the bulk material 65 has not been distributed homogeneously over the volume of the container 60, but rather the bulk material 65 has been poured in the form of heaps, as schematically shown in figure 2b by the interrupted line for the level 67. By flattening out the cargo 66, see the dotted line for the level 67, the degree of filling of the container 60 can be increased. In particular, it may be advantageous here to sense, by means of a sensor 30, the axle loads of the semi-trailer 50, such as of the axles comprising the semi-trailer front wheels 54 and the axles comprising the semi-trailer rear wheels 53 and, in embodiments, also of the tractor 70, and controlling the translation by a control unit 20 (also see description of figure 1 and further below).

Figure 2c schematically shows an comparative example of an alternative solution, wherein the device comprises the semi-trailer 60 and the semi-trailer 60 comprises the apparatus 10. In the shown example, there is question of a so-called rear discharger (semi-trailer) 63, which can be emptied via a container outlet 61 configured at the rear side (the side situated farthest from the apparatus 10). The device 100, more in particular the coupling element 11, in the comparative example also comprises a pin 45 (in particular a kingpin 45), which is configured for coupling the semi-trailer to an external element 175. In the comparative example of figure 2c said external element 175 is a non-mobile external element 175. The external element 175 of the invention comprises a motorised driving means (70). The embodiment of the external element 175 is not restrictive and can in an advantageous embodiment also be a tractor 75.

Because the invention makes it possible to empty a container 50 without tipping, complex constructions required for tipping can be dispensed with. Rear dischargers 63 according to the state of the art, comprise a tipping device. The rear discharger 63 according to the invention is in particular not configured for tipping. The semi-trailer 50 according to the invention can as a result, for instance also be configured as self-supporting semi-trailer 50, wherein the container 60 functions as chassis for the semi-trailer 50. In that case the rear discharger (semi-trailer) 50, 63 in particular comprises no chassis beams across the length 1 of the semi-trailer 50 or at the most across a length of a maximum of 30% of the length 1 of the semi-trailer 50, wherein the container 60, 63 functions as chassis, as shown in figure 2c (also see figure 2b).

In the alternative example of figure 2c, the semi-trailer 50 comprises the apparatus 10. In embodiments of the invention, the external element 175 indeed comprises the apparatus 10 and the semi-trailer 50 comprises a pin 45 that is rigidly connected to the semi-trailer 50. If the apparatus 10 of the alternative solution in figure 2c is moved from the semi-trailer 50 to the external element 175, then figure 2c would schematically show the semi-trailer 50 according to the invention comprising a container 60 having a container outlet 61, wherein the container 60 can be coupled to the device 100 (in that case comprising the external element 175 and the device 10) and wherein the container 60 is configured for containing dry bulk materials 65 and for letting the dry bulk materials 65 flow out of the container 60 under overpressure, and wherein the semi-trailer 50 comprising the container 60 is self-supporting and is not configured for tipping.

During emptying the container 60 certain characteristics of the container 50 and/or the device 100 will change. The axle load of the semi-trailer 50 will for instance decrease due to the cargo 66 flowing out. The difference between the axle loads of the various axles 55 of the semi-trailer or the pressure force on the coupling element 11 can also change due to the cargo 66 shifting. In addition, the maximum acceleration of the coupling element at an unchanged force on the coupling element will increase as the container is emptied further (and therefore is less heavy/inert). In embodiments one or more of these characteristics can be sensed by a sensor 30. The values measured can subsequently be processed by means of a control system 20 and used for controlling the translation (such as controlling the translation distance dt and/or the first maximum acceleration a1, and/or the second maximum acceleration a2, and/or the direction of the first and second directions x1, x2), by means of controlling the actuator 12. The characteristics can provide an indication of the degree of emptying of the container (full to empty), but can for instance also provide an indication of a failure occurring during unloading, such as a blockage in the discharge hose. The control unit 20 and the sensor 30 have only been schematically shown in figure 1. However, similar systems can also be present in the other embodiments shown.

Figures 3a-3b schematically show a few more aspects of an embodiment of the device 100, wherein a fifth wheel 40 is connected to the coupling element 11 / where the first part 13 of the apparatus 10 is arranged between the chassis of a tractor 75 and the fifth wheel 40. Figure 3a schematically shows a side view, whereas figure 3b shows a three-dimensional view of figure 3a. In figure 3a it can be seen that the apparatus 10 is mounted on a profile 76 of an external element 175, in particular a tractor 75 or another motorised driving means 70. The coupling element 11 comprises the fifth wheel 40, whereas the mounting part 14 is rigidly connected to the external element 175 via the profiles 76. Slide bearings 17 enable (the coupling element 11 including) the fifth wheel 40 to translate relative to the mounting part 14 the moment the actuator 12 provides the translation. The first part 13 of the apparatus 10 is then configured for being arranged under a standard fifth wheel 40 without requiring large adjustments.

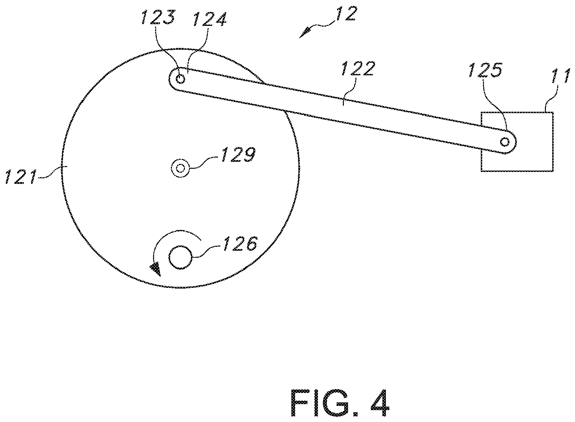

Figure 4 schematically shows an aspect of an actuator 12 according to the invention comprising a rotation-translation-system. The (crankshaft) system is configured for converting a rotation into a translation and comprises a crankshaft or disk 121, which is able to rotate about the point of rotation 126. The shape of a disk 121 is schematically shown. The shape may also be different. Via the point of engagement 123, a connecting rod 122 is connected with its first outer end 124 to the crankshaft 121. With its second outer end 125 the connecting rod 122 is connected to the coupling element 11. A rotation of the crankshaft 121 is thus converted into substantially a translation of the second outer end 125 of the connecting rod 122 and subsequently of the coupling element 11. The system is configured asymmetrically. Where in case of a symmetric configuration the crankshaft 126 and therefore the point of engagement 123 and the first part 124 of the connecting rod 122 as well, would be able to rotate about the central centre 129, this system is able to rotate about the point of rotation 126. As a result, the first outer end 124 does not rotate at a constant speed (if the rotation about the point of rotation 126 is provided at a constant speed of rotation) and consequently a velocity and acceleration of the translation of the coupling element 11 in a direction going forth can be different from the one in the returning direction. In that case, in particular the translation of the second outer end 125 in a first direction can be provided at a lower acceleration than the translation in an opposite, second direction. The apparatus, in particular comprising the (rotation-translation) system, therefore is in particular configured such that an asymmetric acceleration pattern is obtained, wherein the acceleration to the one side is higher than to the other side (apart from the sign). The translation-rotation system can be configured on the tractor, on the semi-trailer, or on another stationary or optionally mobile element to which the semi-trailer can be coupled.

In particular, the translation according to the invention in the first direction and in the second direction is a singular translation. In particular, the translation is a translation in a plane, in particular along a straight line.

The terms 'mainly' and 'substantially' herein, will be understood by the expert. The terms 'mainly' and 'substantially' can also comprise embodiments with 'entirely', and 'fully', 'all', etcetera. That is why the terms 'mainly' and 'substantially' can also be left out in embodiments. Insofar as applicable, the terms 'mainly' and 'substantially' can also relate to 90% or higher, such as 95% or higher, in particular 99% or more, even more in particular 99.5% or more, including 100%. The term 'comprises' also comprises embodiments in which the term 'comprises' means 'contains' or 'consists of.

Moreover, the terms 'first', 'second', 'third' and the like are used in the description and in the claims for distinguishing between possibly similar elements and not necessarily for describing a sequential or chronological order. It should be understood that the terms used in that way are interchangeable under suitable circumstances and the embodiments of the invention described herein can optionally work in different orders than described or illustrated herein.

The apparatuses in this document have among others been described while being used. As will be clear to the expert, the invention is not limited to methods or devices while operational/being used.

It should be noted that the embodiments described herein illustrate rather than restrict the invention and that experts are capable of designing (many) alternative embodiments without departing from the scope of the attached claims. References in parentheses in the claims must not be interpreted as limitation of the claims.

The use of the verb 'to comprise' and its conjugations does not rule out the presence of elements or steps other than those stated in a claim. The article "a" or "an" preceding an element does not rule out the presence of a plurality of such elements.

The invention can be implemented by means of hardware comprising various individual elements, and by means of a suitably programmed computer. The device claims can sum up a variety of means, wherein a variety of said means may be configured with the same hardware.

The mere fact that certain measures are described in sub-claims that differ one from the other, does not indicate that a combination of these measures cannot be applied advantageously.

## Claims

1. A device (100) comprising an apparatus (10) for emptying a container (60), having a container outlet (61) of a semi-trailer (50) comprising said container (60), wherein the apparatus (10) comprises:
(i) a coupling element (11) configured for a functional coupling of the container (60) to an external element (175); and
(ii) an actuator (12) configured for repeatedly translating the coupling element (11) back and forth across a translation distance (dt) selected from the range of 0.1-50 cm, wherein the actuator (12) is configured for (i) translating the coupling element (11) forth for a first period of time (t1) in a first direction (x1) across the translation distance (dt), wherein a first maximum acceleration (a1) is reached, and for (ii) translating the coupling element (11) back again for a second period of time (t2) in a second, opposite direction (x2), wherein a second maximum acceleration (a2) is reached, wherein the first maximum acceleration (a1) is lower than the second maximum acceleration (a2) and the second maximum acceleration (a2) is at least 2 m/s²;
wherein the device (100) comprises said container (60) and the external element (175), wherein the coupling element (11) is configured for a functional coupling of the semi-trailer (50) to the external element (175), and wherein the device (100) is configured for translating the container (60) repeatedly back and forth by means of the apparatus (10), wherein the external element (175) comprises a motorised driving means (70), and wherein the motorised driving means (70) comprises the apparatus (10).

2. The device according to claim 1, wherein the first period of time (t1) is longer than the second period of time (t2).

3. The device (100) according to one or more of the claims 1-2, wherein the actuator (12) is configured for translating the coupling element (11) in the second direction, wherein the second maximum acceleration (a2) is at least 5 m/s².

4. The device (100) according to one or more of the claims 1-3, wherein the translation distance (dt) is selected from the range of 0.1-5 cm.

5. The device (100) according to one or more of the claims 1-4, wherein the actuator (12) comprises a hydraulic actuator and/or wherein the actuator (12) comprises a rotation-translation-system, configured for converting a rotation into a translation.

6. The device (100) according to one or more of the claims 1-5, wherein (i) the container (60) comprises a silo container (62), configured for containing dry bulk materials (65) and for allowing bulk materials (65) to flow out of the container (60) via the container outlet (61) under overpressure, and/or (ii) the semi-trailer (50) comprises a rear discharger (63) and/or wherein the semi-trailer (50) comprising the container (60) is self-supporting.

7. The device (100) according to one or more of the claims 1-6, wherein the coupling element (11) further comprises a fifth wheel (40), wherein the fifth wheel (40) is configured for coupling the semi-trailer (50) comprising the container (60).

8. The device (100) according to claim 7, comprising a tractor (75) for drawing a semi-trailer (50) comprising the container (60), wherein the tractor (75) comprises the coupling element (11) comprising the fifth wheel (40).

9. The device (100) according to one or more of the claims 1-8, comprising a tractor-trailer (80).

10. The device (100) according to one or more of the preceding claims 1-9, further comprising a control unit (20) configured for controlling the actuator (12), and a sensor (30) configured for sensing a characteristic of the device (100), wherein the control unit (20) controls the actuator (12) as a function of the characteristic, wherein the characteristic is selected from the group consisting of a pressure force on the coupling element (11), a maximum acceleration of the coupling element (11), a force on the coupling element (11), an axle load of a semi-trailer (50), and an axle load difference, and wherein the control unit (20) is configured for reducing or increasing one or more of the translation distance (dt), the first period of time (t1), the second period of time (t2), the first maximum acceleration (a1), and the second maximum acceleration (a2) if the characteristic exceeds a specific value.

11. A method for unloading cargo from a container (60) of a semi-trailer (50), comprising said container (60), wherein the container (60) comprises a container outlet (61), the method comprising:
(i) providing the semi-trailer (50) comprising the container (60), an external element (175), and an apparatus (10) according to one or more of the preceding claims 1-16, wherein the container (60) is functionally coupled to the external element (175) by means of the coupling element (11);
(ii) opening the container outlet (61) of the container (60); and
(iii) in a translation stage, translating the coupling element (11) back and forth across a translation distance (dt) selected from the range of 0.1-50 cm, wherein the translation stage comprises:
- translating the coupling element (11) forth in a first direction (x1), wherein a first maximum acceleration (a1) is reached; and subsequently
- translating the coupling element (11) back again in a second, opposite direction (x2), wherein the coupling element (11) achieves a second maximum acceleration (a2), wherein the first maximum acceleration (a1) is lower than the second maximum acceleration (a2) and the second maximum acceleration (a2) is at least 2 m/s²,
and repeating the translation stage, wherein the container (60) is repeatedly translated back and forth, and wherein the container (60) is not tipped, and wherein the semi-trailer (50) is functionally coupled to the external element (175) by means of the coupling element.

12. The method according to claim 11, wherein at least during a part of the translation stage an overpressure is provided in de container (60).

13. The method according to one or more of the preceding claims 11-12, wherein the second maximum acceleration (a2) is at least 5 m/s² and/or wherein the translation stage comprises translating the coupling element forth in a first direction and back in a second direction at least 30 times a minute.

14. The method according to one or more of the preceding claims 11-13, wherein during the translation stage a sensor (30) senses one or more of the characteristics selected from the group consisting of a pressure force on the coupling element (11), an acceleration of the coupling element (11), a velocity of the coupling element (11), an axle load of the semi-trailer (50), and an axle load difference, and a control unit (20) controls the actuator (12) as a function of the characteristic.

15. The method according to one or more of the preceding claims 11-14, wherein the external element (175) comprises a tractor (75) comprising the apparatus (10), the coupling element further comprises a fifth wheel (40), and the semi-trailer (50) is coupled to the fifth wheel (40), and wherein translating the coupling element (11) back and forth in the translation stage comprises translating the fifth wheel (40) back and forth.

## Patentansprüche

1. Vorrichtung (100), umfassend eine Einrichtung (10) zum Leeren eines Behälters (60) mit einem Behälterauslass (61) eines Sattelanhängers (50), der den Behälter (60) umfasst, wobei die Einrichtung (10) Folgendes umfasst:
(i) ein Kopplungselement (11), ausgelegt zum funktionalen Koppeln des Behälters (60) mit einem externen Element (175); und
(ii) einen Aktuator (12), ausgelegt zum wiederholten translatorischen Vorwärts- und Rückwärtsbewegen des Kopplungselements (11) über einen Translationsabstand (dt), ausgewählt aus dem Bereich von 0,1-50 cm, wobei der Aktuator (12) ausgelegt ist zum (i) translatorischen Vorwärtsbewegen des Kopplungselements (11) für eine erste Zeitspanne (t1) in eine erste Richtung (x1) über den Translationsabstand (dt), wobei eine erste maximale Beschleunigung (a1) erreicht wird, und zum (ii) translatorischen Wiederrückwärtsbewegen des Kopplungselements (11) für eine zweite Zeitspanne (t2) in eine zweite, entgegengesetzte Richtung (x2), wobei eine zweite maximale Beschleunigung (a2) erreicht wird, wobei die erste maximale Beschleunigung (a1) niedriger ist als die zweite maximale Beschleunigung (a2) und die zweite maximale Beschleunigung (a2) mindestens 2 m/s² ist; wobei die Vorrichtung (100) den Behälter (60) und das externe Element (175) umfasst, wobei das Kopplungselement (11) ausgelegt ist zum funktionalen Koppeln des Sattelanhängers (50) mit dem externen Element (175), und wobei die Vorrichtung (100) ausgelegt ist zum wiederholten translatorischen Vorwärts- und Rückwärtsbewegen des Behälters (60) mittels der Einrichtung (10), wobei das externe Element (175) ein motorisiertes Antriebsmittel (70) umfasst und wobei das motorisierte Antriebsmittel (70) die Einrichtung (10) umfasst.

2. Vorrichtung nach Anspruch 1, wobei die erste Zeitspanne (t1) länger als die zweite Zeitspanne (t2) ist.

3. Vorrichtung (100) nach einem oder mehreren der Ansprüche 1-2, wobei der Aktuator (12) ausgelegt ist zum translatorischen Bewegen des Kopplungselements (11) in die zweite Richtung, wobei die zweite maximale Beschleunigung (a2) mindestens 5 m/s² ist.

4. Vorrichtung (100) nach einem oder mehreren der Ansprüche 1-3, wobei der Translationsabstand (dt) aus dem Bereich von 0,1-5 cm ausgewählt wird.

5. Vorrichtung (100) nach einem oder mehreren der Ansprüche 1-4, wobei der Aktuator (12) einen hydraulischen Aktuator umfasst und/oder wobei der Aktuator (12) ein Rotations-Translations-System umfasst, das ausgelegt ist zum Umwandeln einer rotatorischen in eine translatorische Bewegung.

6. Vorrichtung (100) nach einem oder mehreren der Ansprüche 1-5, wobei (i) der Behälter (60) einen Silobehälter (62) umfasst, dazu ausgelegt, trockenes Schüttgut (65) zu enthalten und Schüttgut (65) zu ermöglichen, unter Überdruck über den Behälterauslass (61) aus dem Behälter (60) zu fließen, und/oder wobei (ii) der Sattelanhänger (50) einen hinteren Entlader (63) umfasst und/oder wobei der Sattelanhänger (50), der den Behälter (60) umfasst, selbsttragend ist.

7. Vorrichtung (100) nach einem oder mehreren der Ansprüche 1-6, wobei das Kopplungselement (11) ferner ein fünftes Rad (40) umfasst, wobei das fünfte Rad (40) ausgelegt ist zum Koppeln des Sattelanhängers (50), der den Behälter (60) umfasst.

8. Vorrichtung (100) nach Anspruch 7, umfassend eine Zugmaschine (75) zum Ziehen eines Sattelanhängers (50), der den Behälter (60) umfasst, wobei die Zugmaschine (75) das Kopplungselement (11) umfasst, das das fünfte Rad (40) umfasst.

9. Vorrichtung (100) nach einem oder mehreren der Ansprüche 1-8, umfassend einen Sattelzug (80).

10. Vorrichtung (100) nach einem oder mehreren der vorhergehenden Ansprüche 1-9, ferner umfassend eine Steuereinheit (20), ausgelegt zum Steuern des Aktuators (12), und einen Sensor (30), ausgelegt zum Erfassen einer Charakteristik der Vorrichtung (100), wobei die Steuereinheit (20) den Aktuator (12) als eine Funktion der Charakteristik steuert, wobei die Charakteristik aus der Gruppe ausgewählt wird, die besteht aus: einer Druckkraft auf das Kopplungselement (11), einer maximalen Beschleunigung des Kopplungselements (11), einer Kraft auf das Kopplungselement (11), einer Achslast eines Sattelanhängers (50) und einer Achslastdifferenz, und wobei die Steuereinheit (20) ausgelegt ist zum Verringern oder Erhöhen von einem oder mehreren aus dem Translationsabstand (dt), der ersten Zeitspanne (t1), der zweiten Zeitspanne (t2), der ersten maximalen Beschleunigung (a1) und der zweiten maximalen Beschleunigung (a2), wenn die Charakteristik einen spezifischen Wert überschreitet.

11. Verfahren zum Entladen einer Fracht aus einem Behälter (60) eines Sattelanhängers (50), umfassend den Behälter (60), wobei der Behälter (60) einen Behälterauslass (61) umfasst, wobei das Verfahren Folgendes umfasst:
(i) Bereitstellen des Sattelanhängers (50), umfassend den Behälter (60), ein externes Element (175) und eine Einrichtung (10) nach einem oder mehreren der vorhergehenden Ansprüche 1-16, wobei der Behälter (60) mittels des Kopplungselements (11) funktional mit dem externen Element (175) gekoppelt ist;
(ii) Öffnen des Behälterauslasses (61) des Behälters (60); und
(iii) in einer Translationsstufe, translatorisches Vorwärts- und Rückwärtsbewegen des Kopplungselements (11) über einen Translationsabstand (dt), der aus dem Bereich von 0,1-50 cm ausgewählt wird, wobei die Translationsstufe Folgendes umfasst:
- translatorisches Vorwärtsbewegen des Kopplungselements (11) in eine erste Richtung (x1), wobei eine erste maximale Beschleunigung (a1) erreicht wird; und anschließend
- translatorisches Wiederrückwärtsbewegen des Kopplungselements (11) in eine zweite, entgegengesetzte Richtung (x2), wobei das Kopplungselement (11) eine zweite maximale Beschleunigung (a2) erreicht, wobei die erste maximale Beschleunigung (a1) niedriger als die zweite maximale Beschleunigung (a2) ist und die zweite maximale Beschleunigung (a2) mindestens 2 m/s² ist,
und Wiederholen der Translationsstufe, wobei der Behälter (60) wiederholt translatorisch vorwärts- und rückwärtsbewegt wird und wobei der Behälter (60) nicht angekippt ist, und wobei der Sattelanhänger (50) mittels des Kopplungselements funktional mit dem externen Element (175) gekoppelt ist.

12. Verfahren nach Anspruch 11, wobei zumindest während eines Teils der Translationsstufe ein Überdruck im Behälter (60) bereitgestellt wird.

13. Verfahren nach einem oder mehreren der vorhergehenden Ansprüche 11-12, wobei die zweite maximale Beschleunigung (a2) mindestens 5 m/s² ist und/oder wobei die Translationsstufe translatorisches Vorwärtsbewegen des Kopplungselements in eine erste Richtung und Rückwärtsbewegen in eine zweite Richtung mindestens 30 mal pro Minute umfasst.

14. Verfahren nach einem oder mehreren der vorhergehenden Ansprüche 11-13, wobei während der Translationsstufe ein Sensor (30) eine oder mehrere der Charakteristiken erfasst, die aus der Gruppe ausgewählt werden, die besteht aus: einer Druckkraft auf das Kopplungselement (11), einer Beschleunigung des Kopplungselements (11), einer Geschwindigkeit des Kopplungselements (11), einer Achslast des Sattelanhängers (50) und einer Achslastdifferenz, und wobei eine Steuereinheit (20) den Aktuator (12) als eine Funktion der Charakteristik steuert.

15. Verfahren nach einem oder mehreren der vorhergehenden Ansprüche 11-14, wobei das externe Element (175) eine Zugmaschine (75) umfasst, umfassend die Einrichtung (10), wobei das Kopplungselement ferner ein fünftes Rad (40) umfasst, und wobei der Sattelanhänger (50) mit dem fünften Rad (40) gekoppelt ist, und wobei translatorisches Rückwärts- und Vorwärtsbewegen des Kopplungselements (11) in der Translationsstufe translatorisches Rückwärts- und Vorwärtsbewegen des fünften Rades (40) umfasst.

## Revendications

1. Dispositif (100) comprenant un appareil (10) pour vider un conteneur (60), ayant une sortie de conteneur (61) d'une semi-remorque (50) comprenant ledit conteneur (60), l'appareil (10) comprenant :
(i) un élément d'accouplement (11) conçu pour un accouplement fonctionnel du conteneur (60) à un élément externe (175) ; et
(ii) un actionneur (12) conçu pour translater l'élément d'accouplement (11) de manière répétée selon un mouvement de va-et-vient sur une distance de translation (dt) choisie dans la plage de 0,1 à 50 cm, l'actionneur (12) étant conçu pour (i) translater l'élément d'accouplement (11) vers l'avant pendant une première période de temps (t1) dans une première direction (x1) sur la distance de translation (dt), une première accélération maximale (a1) étant atteinte, et pour (ii) translater l'élément d'accouplement (11) vers l'arrière pendant une seconde période de temps (t2) dans une seconde direction opposée (x2), une seconde accélération maximale (a2) étant atteinte, la première accélération maximale (a1) étant inférieure à la seconde accélération maximale (a2) et la seconde accélération maximale (a2) étant d'au moins 2 m/s² ;
le dispositif (100) comprenant ledit conteneur (60) et l'élément externe (175), l'élément d'accouplement (11) étant conçu pour un accouplement fonctionnel de la semi-remorque (50) à l'élément externe (175), et le dispositif (100) étant conçu pour translater le conteneur (60) de manière répétée selon un mouvement de va-et-vient au moyen de l'appareil (10), l'élément externe (175) comprenant un moyen d'entraînement motorisé (70), et le moyen d'entraînement motorisé (70) comprenant l'appareil (10) .

2. Dispositif selon la revendication 1, la première période de temps (t1) étant plus longue que la seconde période de temps (t2).

3. Dispositif (100) selon une ou plusieurs des revendications 1 et 2, l'actionneur (12) étant conçu pour translater l'élément d'accouplement (11) dans la seconde direction, la seconde accélération maximale (a2) étant d'au moins 5 m/s².

4. Dispositif (100) selon une ou plusieurs des revendications 1 à 3, la distance de translation (dt) étant choisie dans la plage de 0,1 à 5 cm.

5. Dispositif (100) selon une ou plusieurs des revendications 1 à 4, l'actionneur (12) comprenant un actionneur hydraulique et/ou l'actionneur (12) comprenant un système de rotation-translation, conçu pour convertir une rotation en une translation.

6. Dispositif (100) selon une ou plusieurs des revendications 1 à 5, (i) le conteneur (60) comprenant un conteneur-silo (62), conçu pour contenir des matériaux en vrac secs (65) et pour permettre aux matériaux en vrac (65) de s'écouler hors du conteneur (60) par l'intermédiaire de la sortie de conteneur (61) sous surpression, et/ou (ii) la semi-remorque (50) comprenant un déchargeur arrière (63) et/ou la semi-remorque (50) comprenant le conteneur (60) étant autoportante.

7. Dispositif (100) selon une ou plusieurs des revendications 1 à 6, l'élément d'accouplement (11) comprenant en outre une cinquième roue (40), la cinquième roue (40) étant conçue pour accoupler la semi-remorque (50) comprenant le conteneur (60).

8. Dispositif (100) selon la revendication 7, comprenant un tracteur (75) pour tirer une semi-remorque (50) comprenant le conteneur (60), le tracteur (75) comprenant l'élément d'accouplement (11) comprenant la cinquième roue (40).

9. Dispositif (100) selon une ou plusieurs des revendications 1 à 8, comprenant un tracteur-remorque (80) .

10. Dispositif (100) selon une ou plusieurs des revendications précédentes 1 à 9, comprenant en outre une unité de commande (20) conçue pour commander l'actionneur (12), et un capteur (30) conçu pour détecter une caractéristique du dispositif (100), l'unité de commande (20) commandant l'actionneur (12) en fonction de la caractéristique, la caractéristique étant choisie dans le groupe constitué par une force de pression sur l'élément d'accouplement (11), une accélération maximale de l'élément d'accouplement (11), une force sur l'élément d'accouplement (11), une charge d'essieu d'une semi-remorque (50) et une différence de charge d'essieu, et l'unité de commande (20) étant conçue pour réduire ou augmenter une distance de translation (dt), la première période de temps (t1), la seconde période de temps (t2), la première accélération maximale (a1) et/ou la seconde accélération maximale (a2) si la caractéristique dépasse une valeur spécifique.

11. Procédé pour décharger une cargaison d'un conteneur (60) d'une semi-remorque (50), comprenant ledit conteneur (60), le conteneur (60) comprenant une sortie de conteneur (61), le procédé comprenant les étapes consistant à :
(i) fournir la semi-remorque (50) comprenant le conteneur (60), un élément externe (175), et un appareil (10) selon une ou plusieurs des revendications précédentes 1 à 16, le conteneur (60) étant fonctionnellement accouplé à l'élément externe (175) au moyen de l'élément d'accouplement (11) ;
(ii) ouvrir la sortie de conteneur (61) du conteneur (60) ; et
(iii) dans une étape de translation, translater l'élément d'accouplement (11) selon un mouvement de va-et-vient sur une distance de translation (dt) choisie dans la plage de 0,1 à 50 cm, la translation comprenant les étapes consistant à :
translater l'élément d'accouplement (11) vers l'avant dans une première direction (x1), une première accélération maximale (a1) étant atteinte ; et ultérieurement
translater l'élément d'accouplement (11) vers l'arrière à nouveau dans une seconde direction opposée (x2), l'élément d'accouplement (11) atteignant une seconde accélération maximale (a2), la première accélération maximale (a1) étant inférieure à la seconde accélération maximale (a2) et la seconde accélération maximale (a2) étant d'au moins 2 m/s²,
et répéter l'étape de translation, le conteneur (60) étant translaté de manière répétée selon un mouvement de va-et-vient, et le conteneur (60) n'étant pas basculé, et la semi-remorque (50) étant fonctionnellement accouplée à l'élément externe (175) au moyen de l'élément d'accouplement.

12. Procédé selon la revendication 11, au moins pendant une partie de l'étape de translation une surpression étant fournie dans le conteneur (60).

13. Procédé selon une ou plusieurs des revendications précédentes 11 et 12, la seconde accélération maximale (a2) étant d'au moins 5 m/s² et/ou l'étape de translation comprenant l'étape consistant à translater l'élément d'accouplement vers l'avant dans une première direction et vers l'arrière dans une seconde direction au moins 30 fois par minute.

14. Procédé selon une ou plusieurs des revendications précédentes 11 à 13, pendant l'étape de translation, un capteur (30) détectant au moins une caractéristique choisie dans le groupe constitué par une force de pression sur l'élément d'accouplement (11), une accélération de l'élément d'accouplement (11), une vitesse de l'élément d'accouplement (11), une charge d'essieu de la semi-remorque (50) et une différence de charge d'essieu, et une unité de commande (20) commandant l'actionneur (12) en fonction de la caractéristique.

15. Procédé selon une ou plusieurs des revendications précédentes 11 à 14, l'élément externe (175) comprenant un tracteur (75) comprenant l'appareil (10), l'élément d'accouplement comprenant en outre une cinquième roue (40), et la semi-remorque (50) étant accouplée à la cinquième roue (40), et la translation de l'élément d'accouplement (11) selon un mouvement de va-et-vient à l'étape de translation comprenant l'étape consistant à translater la cinquième roue (40) selon un mouvement de va-et-vient.
